# EUROPÄISCHE PATENTANMELDUNG

(11) **EP 3 323 291 A1**
(43) Veröffentlichungstag der Anmeldung: **23.05.2018**
(21) Anmeldenummer: 16455005.5
(22) Anmeldetag: 22.11.2016
(51) Int. Cl.: A21B 5/02, A21C 15/02, A21D 13/36

(54) **WICKELVORRICHTUNG UND BACKMASCHINE**

(71) Anmelder: Haas Food Equipment GmbH, 1210 Wien (AT)
(72) Erfinder: Breyer, Markus, 2041 Wullersdorf (AT); Drapela, Norbert, 2103 Langenzersdorf (AT); Jiraschek, Stefan, 2202 Königsbrunn (AT)
(74) Vertreter: Puchberger & Partner Patentanwälte

(57) **Zusammenfassung**

Die Erfindung betrifft eine Wickelvorrichtung (1) und eine Backmaschine umfassend die Wickelvorrichtung (1) zum kontinuierlichen Herstellen von an ihrer Innenseite mit Massen versehenen Waffelröllchen, wobei die Wickelvorrichtung (1) einen entlang einer Hauptachse (5) verlaufenden Rolldorn (2) umfasst, wobei der Rolldorn (2) einen gelagerten Abschnitt (3) und einen auskragenden Abschnitt (4) mit einem freien Ende (11) umfasst, wobei der Rolldorn (2) in seinem auskragenden Abschnitt (4) quer zur Hauptachse (5) von einer Wickelwand (6) begrenzt ist, wobei die Wickelwand (6) eine Wickelfläche (7) aufweist, wobei im Inneren der Wickelwand (6) Massenkanäle (8) zum Einbringen mehrerer Massen in den Innenraum der Waffelröllchen vorgesehen sind, wobei die Massenkanäle (8) im Bereich des freien Endes (11) aus dem Rolldorn (2) austreten, wobei die Massenkanäle (8) durch eine oder mehrere Massenkanalwand/Massenkanalwände (9) begrenzt sind, und wobei die Massenkanalwand (9) oder die Massenkanalwände (9) im auskragenden Abschnitt (4) an der Wickelwand (6) abgestützt ist oder sind.

## Beschreibung

Die Erfindung betrifft eine Wickelvorrichtung und eine Backmaschine gemäß den Oberbegriffen der unabhängigen Patentansprüche.

Die Erfindung betrifft insbesondere eine Backmaschine, wie sie beispielsweise in den Publikationen AT 381 440 B, AT 514 571 B1, EP 1 175 150 B1, AT 409 703 B, AT 413 177 B beschrieben ist, wobei eine neuartige Wickelvorrichtung eingesetzt wird.

Backmaschinen und Wickelvorrichtungen zum kontinuierlichen Herstellen von an ihrer Innenseite mit mehreren Massen wie beispielsweise essbaren Cremes versehenen, essbaren Waffelröllchen, sind in unterschiedlichen Ausführungsformen bekannt und publiziert.

Herkömmliche Ringbackmaschinen umfassen eine kontinuierlich um ihre Drehachse gedrehte, zylindrische Backfläche, auf der im warmen Zustand plastisch verformbare Waffelbänder gebacken werden, die in weiterer Folge durch eine Abnahme- und Wickelvorrichtung von der zylindrischen Backfläche abgenommen und aufgerollt werden. Das Aufrollen bzw. Aufwickeln des Waffelbands geschieht bei einer kontinuierlichen Fortbewegung des zu bildenden Röllchens zwischen einem drehbar angetriebenen Rolldorn und einer Andrückwalze der Wickelvorrichtung. Dadurch wird eine im Wesentlichen endlose Waffelrolle gebildet, die in vordefinierten Abständen zu Waffelröllchen abgelängt wird.

Gemäß Stand der Technik ist es auch bekannt, zur Herstellung von Waffelröllchen, die mehrere unterschiedliche Cremefüllungen umfassen, mehrere Cremes gleichzeitig in die endlosen Waffelrollen einzubringen. Hierzu sind Rohr-in-Rohr-Konstruktionen bekannt, bei denen ein Rohr mit einem kleinen Durchmesser konzentrisch in einem Rohr mit einem größeren Durchmesser vorgesehen ist, um durch das mittlere, kleinere Rohr eine erste Masse und durch den verbleibenden Ringspalt eine zweite Masse einzubringen. In der Praxis hat sich herausgestellt, dass sich Lage der Rohre gegenüber einander bei längeren Standzeiten verändert, wodurch sich auch das Cremebild innerhalb des Backprodukts verändert.

Ferner besteht am Markt eine Nachfrage nach Cremefüllungen in Waffelröllchen, die eine bestimmte Form bzw. Verteilung aufweisen. Diese Form bzw. Verteilung kann beispielsweise eine Streifenform, eine Sternform, eine Sektorform, aber auch eine andere geometrische Form wie beispielsweise ein Firmenlogo sein. Insbesondere bei komplexeren Anordnungen der unterschiedlichen Massen ist es notwendig, ein konstantes Bild bzw. eine konstante Verteilung der Massen in den Waffelröllchen gewährleisten zu können. Mit herkömmlichen Vorrichtungen und Verfahren zur Füllung von endlos gerollten Waffelprodukten mit essbaren Cremes ist diese Vorgabe bisher nicht erfüllbar.

Aufgabe der Erfindung ist es nun, die Nachteile des Standes der Technik zu überwinden. Insbesondere ist es Aufgabe der Erfindung, eine Wickelvorrichtung und eine Backmaschine bereitzustellen, bei der mehrere Cremes in einer beliebigen Anordnung in den Innenraum eines endlosen hülsenförmigen Hohlkörpers oder eines Waffelröllchens eingebracht werden können.

Die erfindungsgemäße Aufgabe wird insbesondere durch die Merkmale der unabhängigen Patentansprüche gelöst.

Gegebenenfalls betrifft die Erfindung eine Wickelvorrichtung zum kontinuierlichen Herstellen von an ihrer Innenseite mit mehreren Massen wie beispielsweise essbaren Cremes versehenen, essbaren Waffelröllchen, wobei die Wickelvorrichtung einen entlang einer Hauptachse verlaufenden Rolldorn umfasst, wobei der Rolldorn einen gelagerten Abschnitt und einen auskragenden Abschnitt mit einem freien Ende umfasst, wobei der Rolldorn in seinem auskragenden Abschnitt quer zur Hauptachse von einer Wickelwand begrenzt ist, wobei die zylindrische Wickelwand eine außenliegende, zylindrische Wickelfläche aufweist, die zur Anlage und zum Einrollen eines warmen, plastisch verformbaren Waffelbands eingerichtet ist, wobei im Inneren der Wickelwand mehrere entlang der Hauptachse verlaufende Massenkanäle zum Einbringen mehrerer Massen in den Innenraum eines endlosen, hülsenförmigen Hohlkörpers oder der Waffelröllchen vorgesehen sind, wobei die Massenkanäle im Bereich des freien Endes aus dem Rolldorn austreten, und wobei die Massenkanäle durch eine Massenkanalwand oder durch mehrere Massenkanalwände begrenzt sind.

Gegebenenfalls ist vorgesehen, dass die Massenkanalwand oder die Massenkanalwände im auskragenden Abschnitt an der Wickelwand abgestützt ist oder sind.

Gegebenenfalls ist vorgesehen, dass die Massenkanalwand oder die Massenkanalwände im auskragenden Abschnitt über ihre gesamte Länge an der Wickelwand abgestützt ist oder sind.

Gegebenenfalls ist vorgesehen, dass mehrere Massenkanalwände zusammen einen starren Massenkanalwandverbund bilden, der über mindestens eine der Massenkanalwände des Massenkanalwandverbunds an der Wickelwand abgestützt ist, der starr mit der Wickelwand verbunden und/oder der einstückig mit der Wickelwand ausgebildet ist.

Gegebenenfalls ist vorgesehen, dass sich die durch die mindestens eine Massenkanalwand voneinander abgetrennten Massenkanäle geschlossen, voneinander abgetrennt von dem gelagerten Abschnitt des Rolldorns bis zum freien Ende des auskragenden Abschnitts des Rolldorns erstrecken.

Gegebenenfalls ist vorgesehen, dass sich die mindestens eine Massenkanalwand oder der Massenkanalverbund profilförmig oder spiralförmig entlang der Hauptachse oder parallel zur Hauptachse durch den auskragenden Abschnitt des Rolldorns erstrecken.

Gegebenenfalls ist vorgesehen,
- dass außenliegende Massenkanäle vorgesehen sind, die sich bis an die Innenseite der Wickelwand erstrecken und die zumindest teilweise von der Innenseite der Wickelwand begrenzt sind,
- und dass sich die Massenkanalwände der außenliegenden Massenkanäle im auskragenden Abschnitt bis an die Innenseite der Wickelwand erstrecken.

Gegebenenfalls ist vorgesehen,
- dass mindestens ein außenliegender Massenkanal vorgesehen ist, der sich bis an die Innenseite der Wickelwand erstreckt und der zumindest teilweise von der Innenseite der Wickelwand begrenzt ist,
- dass mindestens ein innenliegender Massenkanal vorgesehen ist, der im auskragenden Abschnitt entfernt von der Wickelwand angeordnet ist,
- und dass die Massenkanalwand des innenliegenden Massenkanals im auskragenden Abschnitt durch die Massenkanalwand oder Massenkanalwände des mindestens einen außenliegenden Massenkanals an der Wickelwand abgestützt ist.

Gegebenenfalls ist vorgesehen,
- dass mehrere Massenkanäle einen von eine kreisrunden Form abweichenden Querschnitt aufweisen,
- und/oder dass mehrere Massenkanäle einen kreissektorförmigen oder ringsegmentförmigen Querschnitt aufweisen.

Gegebenenfalls ist vorgesehen,
- dass der Rolldorn um die Hauptachse drehbar oder drehbar angetrieben angeordet ist,
- dass der Rolldorn im Bereich seines gelagerten Abschnitts von mehreren entlang der Hauptachse voneinander beabstandet angeordneten Zuführringkammern zur Zuführung der Massen in die Massenkanäle des drehenden Rolldorns umgeben ist,
- dass sich die Massenkanäle bis in den gelagerten Abschnitt des Rolldorns erstrecken dort in radialer Richtung oder schräg jeweils in eine der Zuführringkammern münden.

Gegebenenfalls ist vorgesehen, dass eine um eine Nebenachse drehbare oder drehbar angetriebene Andrückwalze vorgesehen ist.

Gegebenenfalls ist vorgesehen, dass der Rolldorn oder die Massenkanäle des Rolldorns durch einen Temperierkanal oder mehrere Temperierkanäle beheizt oder gekühlt sind.

Gegebenenfalls ist vorgesehen, dass der Rolldorn und insbesondere die Wickelwand einen Temperierkanal oder mehrere Temperierkanäle, wie insbesondere einen Kühlkanal oder einen Heizkanal zur Leitung eines Temperiermediums umfasst.

Gegebenenfalls ist vorgesehen, dass der Rolldorn und/oder die Ringkammern, zur Durchleitung eines Temperiermediums und zur Temperierung der Masse, im gelagerten Abschnitt von einem oder mehreren Temperierkanälen umgeben ist.

Gegebenenfalls ist vorgesehen, dass die mindestens eine Massenkanalwand spiralförmig oder verdreht ausgebildet ist.

Gegebenenfalls betrifft die Erfindung, eine Backmaschine zum kontinuierlichen Herstellen von essbaren Waffelröllchen mit zumindest einer, kontinuierlich umlaufenden, beheizten Backfläche zum Backen von zumindest einem, endlosen, im warmen Zustand plastisch verformbaren Waffelband aus flüssigem, zuckerhaltigem Waffelteig und mit einer Verarbeitungsstation, in der für jedes gebackene Waffelband jeweils eine der Backfläche benachbarte Abnahmevorrichtung, eine dieser Abnahmevorrichtung nachgeordnete Wickelvorrichtung zum Erzeugen eines endlosen hülsenförmigen Hohlkörpers und eine der Wickelvorrichtung nachgeordnete Schneidvorrichtung zum Ablängen des hülsenförmigen Hohlkörpers in einzelne Waffelröllchen vorgesehen ist, wobei die Wickelvorrichtung wie in der Beschreibung offenbart ausgebildet ist.

Die erfindungsgemäße Vorrichtung umfasst mehrere Massenkanäle, durch welche unterschiedliche Cremes in den endlosen hülsenförmigen Hohlkörper bzw. in die Waffelröllchen eingebracht werden können. Bevorzugt weisen die Massen unterschiedliche Zusammensetzungen auf. Beispielsweise haben die Massen unterschiedliche Farben, wodurch bei einer Betrachtung des Querschnitts des fertig gefüllten Produkts ein bestimmtes Bild sichtbar ist. Ferner kann auch eine gewisse Geschmacksverteilung innerhalb der Waffelröllchen vorgesehen werden, so dass sich daraus ein spezieller Geschmackseindruck ergibt. Auch Massen mit unterschiedlicher Konsistenz können zur Beeinflussung der geschmacklichen oder physikalischen Eigenschaften eingesetzt werden.

Die Massenkanäle erstrecken sich bevorzugt entlang der Hauptachse des Rolldorns von einem gelagerten Abschnitt in einen auskragenden Abschnitt. Am Ende des auskragenden Abschnittes, insbesondere im Bereich des Endes, treten die Massenkanäle aus dem Rolldorn aus, womit an dieser Stelle oder in diesem Bereich auch die Massen aus dem Rolldorn austreten. Begrenzt werden die Massenkanäle jeweils durch Massenkanalwände bzw. durch eine Massenkanalwand. Diese Massenkanalwände erstrecken sich bevorzugt profilförmig entlang der Hauptachse oder parallel zur Hauptachse durch den auskragenden Abschnitt des Rolldorns. Dies bedeutet insbesondere, dass der Querschnitt, normal zur Hauptachse des Rolldorns, über die gesamte Länge des auskragenden Abschnitts des Rolldorns im Wesentlichen unverändert bleibt. Gegebenenfalls sind die Massenkanäle bzw. die mindestens eine Massenkanalwand spiralförmig oder verdreht ausgebildet. Bevorzugt sind die Massenkanäle und deren Massenkanalwände durchgehend ausgebildet, so dass es zu keiner Vermischung der Massen im Verlauf des Rolldorns kommt. Gegebenenfalls können die Massenkanalwände knapp vor dem freien Ende und damit knapp vor dem Austritt der Masse enden. Insgesamt ist es jedoch erfindungsgemäß als vorteilhaft anzusehen, ein vorherbestimmbares Muster bzw. eine vorherbestimmbare Anordnung der unterschiedlichen Massen in den Waffelröllchen vorsehen zu können.

Zusammen bilden die einzelnen Massenkanalwände bevorzugt einen Massenkanalverbund. Dieser Verbund ist im Wesentlichen starr ausgebildet und erstreckt sich bevorzugt durch den gesamten auskragenden Abschnitt des Rolldorns. Die Massenkanalwand, die Massenkanalwände und/oder der Massenkanalwandverbund sind gemäß der bevorzugten Ausführungsform an der Wickelwand abgestützt. Dadurch sind die Massenkanalwände unbeweglich bzw. starr im Inneren des Rolldorns festgehalten. Eine nachträgliche, ungewollte Verlagerung der Massenkanäle ist dadurch verhindert. Ferner kann durch diese Abstützung und die starre Anordnung der Massenkanäle eine feinere Gliederung und Formgebung der Massenkanäle erfolgen.

Bevorzugt wird der Rolldorn oder zumindest der Massenkanalwandverbund bzw. die Massenkanäle durch 3D-Druck hergestellt.

Gegebenenfalls ist vorgesehen, dass zumindest zwei Massenkanäle und zumindest zwei Ringkammern vorgesehen sind. Gegebenenfalls ist vorgesehen, dass mehr Massenkanäle als Ringkammern vorgesehen sind. In diesem Fall werden mehrere Massenkanäle mit derselben Masse durchströmt.

Der auskragende Abschnitt des Rolldorns hat beispielsweise einen Durchmesser von 2mm bis 60mm, insbesondere von 4mm bis 36mm. Die Länge des auskragenden Abschnitts beträgt beispielsweise 100mm bis 400mm, insbesondere 100mm bis 210mm. Die Wandstärke der Massenkanalwände beträgt beispielsweise 0,1 mm bis 5mm, insbesondere 0,2mm bis 2mm. Die Wandstärke der Wickelwand beträgt beispielsweise 0,2mm bis 2mm.

In weiterer Folge wird die Erfindung anhand exemplarischer Ausführungsformen und anhand der Figuren weiter beschrieben.

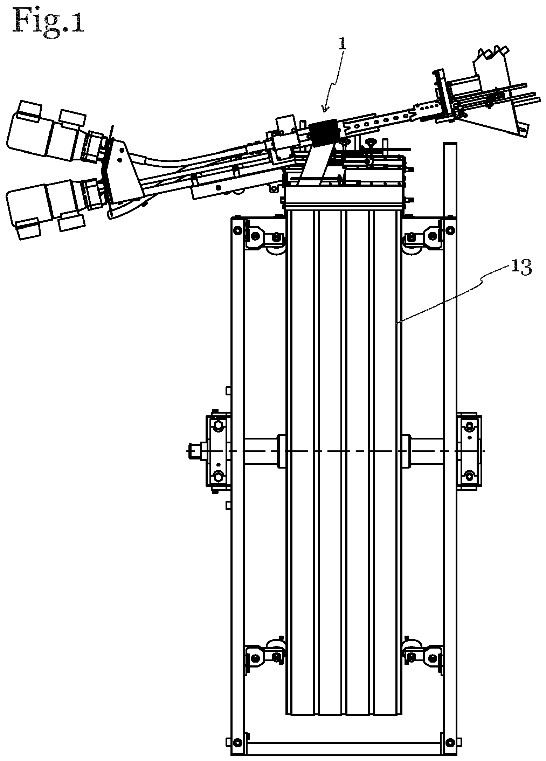

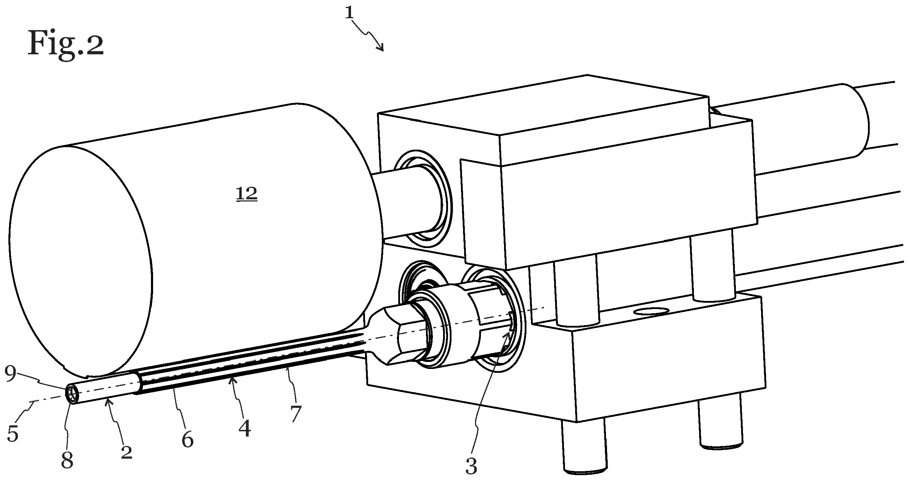

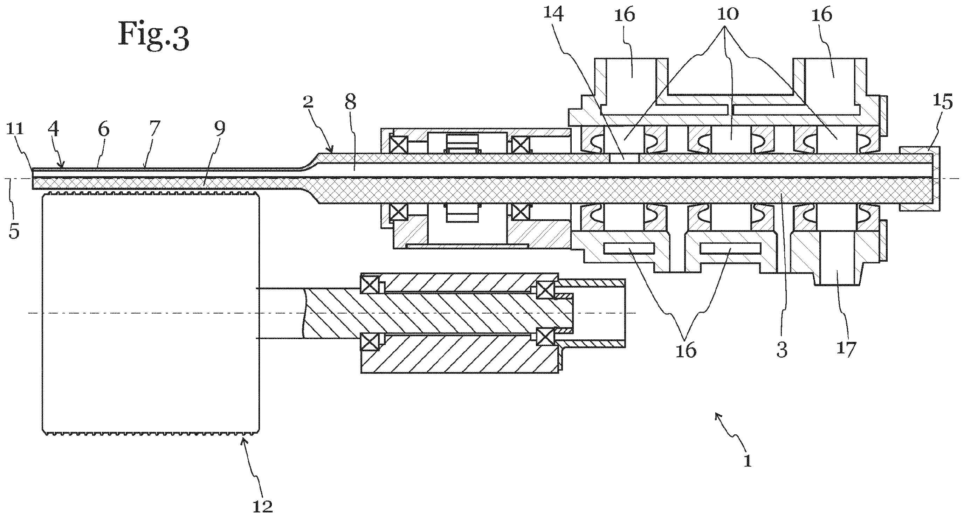

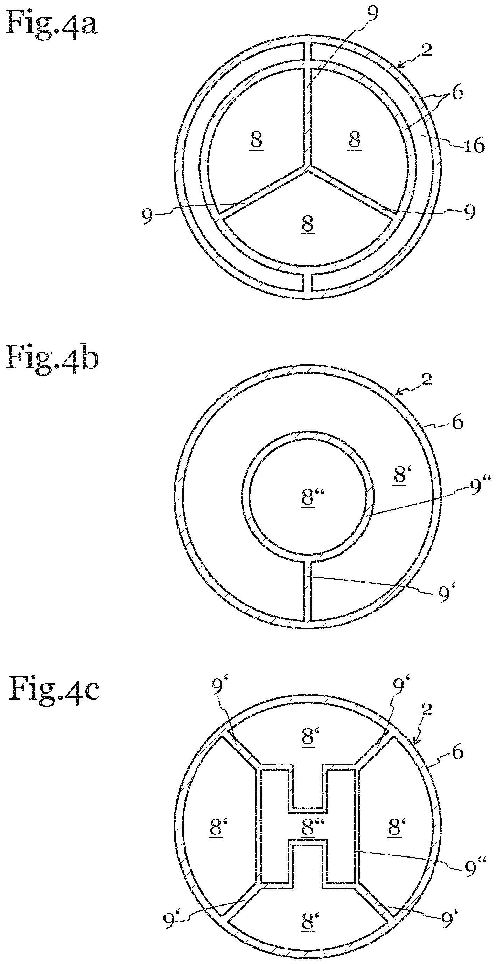

Fig. 1 zeigt eine Ansicht einer Backmaschine, Figur 2 zeigt eine schematische Schrägansicht einer möglichen Ausführungsform bzw. von ausgewählten Komponenten der Wickelvorrichtung, Figur 3 zeigt eine Schnittdarstellung einer möglichen Ausführungsform von maßgeblichen Komponenten einer Wickelvorrichtung, wobei die Wickelvorrichtung insbesondere gemäß Fig. 2 ausgebildet ist und die Figuren 4a bis 4c zeigen unterschiedliche Ausführungsformen eines Rolldorns.

Wenn nicht anders angegeben, so entsprechen die Bezugszeichen folgenden Komponenten: Wickelvorrichtung 1, Rolldorn 2, gelagerter Abschnitt (des Rolldorns) 3, auskragender Abschnitt (des Rolldorns) 4, Hauptachse 5, Wickelwand 6, Wickelfläche 7, Massenkanal 8, Massenkanalwand 9, Ringkammer 10, freies Ende 11, Andrückwalze 12, Backfläche 13, Masseneintrittsöffung 14, Verschluss 15, Temperierkanal 16, Massenzuführöffnung 17.

Figur 1 zeigt eine Backmaschine zum kontinuierlichen Herstellen von essbaren Waffelröllchen mit zumindest einer kontinuierlichen umlaufenden, beheizten Backfläche 13, wobei die Backfläche 13 zum Backen von zumindest einem, im vorliegenden Fall mehreren, endlosen, im warmen Zustand plastisch verformbaren Waffelbändern aus flüssigem, zuckerhaltigem Waffelteig eingerichtet ist. Zur Herstellung endloser, hülsenförmiger Hohlkörper bzw. zur Herstellung von essbaren Waffelröllchen sind eine oder mehrere Wickelvorrichtungen 1 vorgesehen. Durch diese Wickelvorrichtungen 1 kann ein endloses, gebackenes, im warmen Zustand plastisch verformbares Waffelband zu einem endlosen hülsenförmigen Hohlkörper gewickelt werden. Bevorzugt ist eine nachgeordnete Schneidvorrichtung zum Ablängen des hülsenförmigen Hohlkörpers zu einzelnen Waffelröllchen vorgesehen.

Zur Füllung der Hohlkörper umfasst die Wickelvorrichtung eine Massenzuführung. Diese ist dazu eingerichtet, eine oder mehrere Massen in den hülsenförmigen Hohlkörper einzubringen. Dazu umfasst die Anordnung bzw. die Backmaschine eine Pumpe oder mehrere Pumpen zur Förderung der Massen.

Figur 2 zeigt eine schematische Schrägansicht einer möglichen Ausführungsform bzw. von ausgewählten Komponenten der Wickelvorrichtung 1. Die Wickelvorrichtung 1 umfasst einen entlang einer Hauptachse 5 verlaufenden Rolldorn 2. Der Rolldorn 2 umfasst einen gelagerten Abschnitt 3 sowie einen auskragenden Abschnitt 4. Quer zur Hauptachse 5 ist der Rolldorn 2 von einer Wickelwand 6 begrenzt. Die Wickelwand 6 umfasst bevorzugt eine außenliegende, zylindrische Wickelfläche 7. Diese Wickelfläche 7 ist zur Anlage und zum Einrollen des warmen, plastisch verformbaren Waffelbands eingerichtet.

Im Inneren der Wickelwand 6, insbesondere im Inneren des Rolldorns 2, sind mehrere Massenkanäle 8 vorgesehen. Diese Massenkanäle 8 sind zum Einbringen mehrerer Massen in den Innenraum eines endlosen, hülsenförmigen Hohlkörpers eingerichtet. Die Massenkanäle 8 sind zumindest teilweise von Massenkanalwänden 9 bzw. von zumindest einer Massenkanalwand 9 begrenzt.

Ferner umfasst die Wickelvorrichtung 1 bevorzugt eine Andrückwalze 12. Zwischen der Andrückwalze 12 und dem Rolldorn 2 ist ein Wickelspalt vorgesehen. Sowohl der Rolldorn 2 als auch die Andrückwalze 12 sind bevorzugt drehbar angeordnet und insbesondere drehbar angetrieben angeordnet. Bevorzugt ist die Drehrichtung des Rolldorns 2 der Drehrichtung der Andrückwalze 12 entgegengesetzt. Dadurch kann das Backband in den Wickelspalt eingezogen werden. Die Andrückwalze 12 umfasst eine Außenfläche, die eine Aufwickelung und insbesondere auch eine Förderung des Waffelbandes zu einem Hohlkörper bewirkt.

Figur 3 zeigt eine Schnittdarstellung einer möglichen Ausführungsform von maßgeblichen Komponenten einer Wickelvorrichtung 1, wobei die Wickelvorrichtung 1 insbesondere gemäß Fig. 2 ausgebildet ist. Die Wickelvorrichtung 1 umfasst einen Rolldorn 2. Bevorzugt ist wiederum eine Andrückwalze 12 vorgesehen. Der Rolldorn 2 umfasst einen gelagerten Abschnitt 3 und einen auskragenden Abschnitt 4. Der Rolldorn 2 verläuft entlang einer Hauptachse 5 und ist bevorzugt auch um diese Hauptachse 5 drehbar angeordnet. Der auskragende Abschnitt 4 ist quer zur Hauptachse 5 durch eine Wickelwand 6 begrenzt. Die Wickelwand 6 umfasst in der vorliegenden Ausführungsform eine außenliegende, zylindrisch ausgebildete Wickelfläche 7. Die Mittelachse der zylindrischen Wickelfläche ist koaxial zur Hauptachse 5 angeordnet.

Im Inneren des Rolldorns 2 sind mehrere Massenkanäle 8 vorgesehen. In der vorliegenden Ausführungsform sind drei Massenkanäle 8 vorgesehen, wobei in der Darstellung der Figur 3 lediglich ein Massenkanal sichtbar ist. Der eingezeichnete Massenkanal 8 erstreckt sich vom gelagerten Abschnitt 3 bis in den auskragenden Abschnitt 4 und tritt am freien Ende 11 des Rolldorns 2 bzw. des auskragenden Abschnitts 4 des Rolldorns 2 aus dem Rolldorn 2 aus. Im gelagerten Abschnitt 3 des Rolldorns 2 ist der Massenkanal 8 in radialer Richtung nach außen geführt. Der Massenkanal 8 durchsetzt in diesem Bereich die Außenseite des Rolldorns 2. Insbesondere mündet der Massenkanal 8 in diesen Bereich in eine Ringkammer 10. Die Ringkammer 10 umgibt den Rolldorn 2 im Bereich der Masseneintrittsöffnung 14 ringförmig. Dadurch kann, unabhängig von der Drehstellung des Rolldorns 2, eine Masse durch die Ringkammer 10, die Masseneintrittsöffnung 14 und den Massenkanal 8 in das zu füllende Waffelröllchen eingebracht werden. Die Massenkanäle 8 erstrecken sich in der vorliegenden Ausführungsform, gegebenenfalls in allen Ausführungsformen, im Wesentlichen geradlinig durch den gesamten Rolldorn 2. Im hinteren Bereich, insbesondere im gelagerten Abschnitt 3 des Rolldorns 2 ist ein Verschluss 15 vorgesehen. Dieser Verschluss 15 verschließt den Massenkanal 8, insbesondere alle Massenkanäle 8, auf einer Seite des Rolldorns 2. Durch ein Entfernen des Verschlusses 15 kann beispielsweise ein verlegter Massenkanal 8 mit einem geraden Werkzeug durchgestoßen werden. Durch das Verschließen des Massenkanals 8 mit dem Verschluss 15 und durch das Zuführen der Masse in den Massenkanal 8 tritt die Masse ausschließlich am freien Ende 11 des Rolldorns 2 aus. In der vorliegenden Ausführungsform sind drei Ringkammern 10 vorgesehen. Bevorzugt sind auch 3 Massenkanäle 8 vorgesehen, die jeweils mit einer Masseneintrittsöffnung 14 versehen sind. Die Masseneintrittsöffnungen 14 der unterschiedlichen Massenkanäle sind entlang der Hauptachse 5 voneinander beabstandet angeordnet. Auch die Ringkammern 10 sind entlang der Hauptachse 5 voneinander beabstandet angeordnet. Dadurch können unterschiedliche Massen in unterschiedliche Massenkanäle 8 eingebracht werden.

Ferner umfasst die Wickelvorrichtung 1 eine Massenzuführöffnung 17 zur Zuführung einer Masse. Die Massenzuführöffnung 17 ist insbesondere ortsfest in einem Gehäuse vorgesehen. Die Massenzuführöffnung mündet in eine Ringkammer 10. Die Ringkammer 10 ist über eine Masseneintrittsöffnung 14 des Rolldorns mit einem der Massenkanäle 8 verbunden. Insbesondere mündet in jede Ringkammer 10 eine Massenzuführöffnung 17. Dadurch können unterschiedliche Massen in unterschiedliche Massenkanäle 8 eingebracht werden.

Ferner ist in der vorliegenden Ausführungsform zumindest ein Temperierkanal 16 vorgesehen. Dieser Temperierkanal 16 dient der Temperierung, insbesondere der Heizung oder der Kühlung, des Rolldorns 2 und/oder der einzubringenden Massen. Durch eine Beheizung beispielsweise kann ein Verstopfen durch eine beim Auskühlen stockenden Masse verhindert werden. Gegebenenfalls kann alternativ eine Kühlung erfolgen.

Gegebenenfalls kann sich ein Temperierkanal 16 auch durch die Wickelwand 6 oder innerhalb der Wickelwand 6 erstrecken. Die Zu- und Abführung eines Temperiermediums erfolgt in diesem Fall über eine oder mehrere Ringkammern.

Die Figuren 4a bis 4c zeigen unterschiedliche Ausführungsformen eines Rolldorns 2, insbesondere der Massenkanäle 8. Insbesondere stellen die Figuren 4a bis 4c mögliche Querschnitte des profilförmig entlang der Hauptachse angeordneten, auskragenden Abschnitts 4 des Rolldorns 2 dar.

Die Figuren 4a bis 4c sind insbesondere schematische Schnittdarstellungen unterschiedlicher Rolldorne 2, wobei die Schnittebene im auskragenden Abschnitt 4 des Rolldorn 2 angeordnet ist, und im Wesentlichen normal zur Hauptachse 5 verläuft.

Figur 4a zeigt ein Profil eines Rolldorns 2 mit drei Massenkanälen 8. Die Massenkanäle 8 sind zumindest teilweise von Massenkanalwänden 9 begrenzt. Teilweise sind die Massenkanäle 8 auch von der Wickelwand 6 begrenzt. Die Wickelwand 6 umfasst in der vorliegenden Ausführungsform zumindest einen Temperierkanal 16. Dieser verläuft innerhalb der Wickelwand 6. Die Massenkanalwände 9 bilden zusammen einen Massenkanalwandverbund, der in der vorliegenden Ausführungsform sternförmig ausgebildet ist. Die Massenkanalwände 9 und auch der Massenkanalwandverbund sind an der Wickelwand 6 und insbesondere an der Innenseite der Wickelwand 6 abgestützt. Gegebenenfalls sind in allen Ausführungsformen, wie in der vorliegenden Ausführungsform dargestellt, der Massenkanalwandverbund, die Massenkanalwände 9 und die Wickelwand 6 einstückig ausgebildet. Bevorzugt erstreckt sich das Profil in allen Ausführungsformen unverändert durch den gesamten auskragenden Abschnitt 4 des Rolldorns 2. Dadurch sind die Massenkanalwände 9 und gegebenenfalls auch der Massenkanalwandverbund über ihre gesamte Länge oder über ihre gesamte maßgebliche Länge an der Wickelwand 6 abgestützt. Dadurch ist ein starrer Verbund gebildet.

Figur 4b zeigt eine weitere Ausführungsform eines Profils eines Rolldorns 2 und insbesondere eine spezielle Anordnung zweier Massenkanäle 8. Der Rolldorn 2 umfasst einen außenliegenden Massenkanal 8' und einen innenliegenden Massenkanal 8". Der außenliegende Massenkanal 8' erstreckt sich bis an die Innenseite der Wickelwand 6. Der innenliegende Massenkanal 8" ist innenliegend ausgebildet und von dem außenliegenden Massenkanal 8' umgeben. Der innenliegende Massenkanal 8" ist von einer innenliegenden Massenkanalwand 9" gebildet bzw. begrenzt. Diese innenliegende Massenkanalwand 9" ist durch eine Massenkanalwand 9' an der Wickelwand 6 abgestützt. Zusammen bilden die innenliegende Massenkanalwand 9" und die außenliegende Massenkanalwand 9' einen Massenkanalverbund, der an der Wickelwand 6 abgestützt ist. Die innenliegende Massenkanalwand 9" ist dadurch an der Wickelwand 6 abgestützt. Insbesondere ist die innenliegende Massenkanalwand 9" über die außenliegende Massenkanalwand 9' an der Wickelwand 6 abgestützt.

Figur 4c zeigt eine weitere Ausführungsform des Profils eines Rolldorns 2. Der innenliegende Massenkanal 8' hat eine beliebige, durch die Geometrie des Rolldorns 2 bestimmte Form. Dieser Massenkanal 8" ist seitlich durch eine innenliegende Massenkanalwand 9" begrenzt. Wiederum sind die Massenkanalwände 9' und 9" an der Wickelwand 6 abgestützt, wobei auch in dieser Ausführungsform durch die Massenkanalwände 9' und 9" ein Massenkanalwandverbund gebildet ist.

In der vorliegenden Ausführungsform der Figur 4c kann beispielsweise durch die außenliegenden Massenkanäle 8' dieselbe Masse gefördert werden. Im innenliegenden Massenkanal 8" kann beispielsweise eine andere, eine andersfärbige oder eine Masse mit einer anderen Konsistenz, eingebracht werden. Im Querschnitt des gefüllten Waffelröllchens ergibt sich dadurch eine durch die Geometrie beliebig vorherbestimmbare Form der Anordnung der unterschiedlichen Massen.

## Patentansprüche

1. **Wickelvorrichtung** (1) zum kontinuierlichen Herstellen von an ihrer Innenseite mit mehreren Massen wie beispielsweise essbaren Cremes versehenen, essbaren Waffelröllchen,
- wobei die Wickelvorrichtung (1) einen entlang einer Hauptachse (5) verlaufenden Rolldorn (2) umfasst,
- wobei der Rolldorn (2) einen gelagerten Abschnitt (3) und einen auskragenden Abschnitt (4) mit einem freien Ende (11) umfasst,
- wobei der Rolldorn (2) in seinem auskragenden Abschnitt (4) quer zur Hauptachse (5) von einer Wickelwand (6) begrenzt ist,
- wobei die zylindrische Wickelwand (6) eine außenliegende, zylindrische Wickelfläche (7) aufweist, die zur Anlage und zum Einrollen eines warmen, plastisch verformbaren Waffelbands eingerichtet ist,
- wobei im Inneren der Wickelwand (6) mehrere entlang der Hauptachse (5) verlaufende Massenkanäle (8) zum Einbringen mehrerer Massen in den Innenraum eines endlosen, hülsenförmigen Hohlkörpers oder der Waffelröllchen vorgesehen sind,
- wobei die Massenkanäle (8) im Bereich des freien Endes (11) aus dem Rolldorn (2) austreten,
- und wobei die Massenkanäle (8) durch eine Massenkanalwand (9) oder durch mehrere Massenkanalwände (9) begrenzt sind,
**dadurch gekennzeichnet, dass** die Massenkanalwand (9) oder die Massenkanalwände (9) im auskragenden Abschnitt (4) an der Wickelwand (6) abgestützt ist oder sind.

2. Wickelvorrichtung (1) nach Anspruch 1, **dadurch gekennzeichnet, dass** die Massenkanalwand (9) oder die Massenkanalwände (9) im auskragenden Abschnitt (4) über ihre gesamte Länge an der Wickelwand (6) abgestützt ist oder sind.

3. Wickelvorrichtung (1) nach Anspruch 1 oder 2, **dadurch gekennzeichnet, dass** mehrere Massenkanalwände (9) zusammen einen starren Massenkanalwandverbund bilden, der über mindestens eine der Massenkanalwände (9) des Massenkanalwandverbunds an der Wickelwand (6) abgestützt ist, der starr mit der Wickelwand (6) verbunden und/oder der einstückig mit der Wickelwand (6) ausgebildet ist.

4. Wickelvorrichtung (1) nach einem der Ansprüche 1 bis 3, **dadurch gekennzeichnet, dass** sich die durch die mindestens eine Massenkanalwand (9) voneinander abgetrennten Massenkanäle (8) geschlossen, voneinander abgetrennt von dem gelagerten Abschnitt (3) des Rolldorns (2) bis zum freien Ende (11) des auskragenden Abschnitts (4) des Rolldorns (2) erstrecken.

5. Wickelvorrichtung (1) nach einem der Ansprüche 1 bis 4, **dadurch gekennzeichnet, dass** sich die mindestens eine Massenkanalwand (9) oder der Massenkanalverbund profilförmig entlang der Hauptachse (5) oder parallel zur Hauptachse (5) durch den auskragenden Abschnitt (4) des Rolldorns (2) erstrecken.

6. Wickelvorrichtung (1) nach einem der Ansprüche 1 bis 5, **dadurch gekennzeichnet,**
- **dass** außenliegende Massenkanäle (8') vorgesehen sind, die sich bis an die Innenseite der Wickelwand (6) erstrecken und die zumindest teilweise von der Innenseite der Wickelwand (6) begrenzt sind,
- und **dass** sich die Massenkanalwände (9') der außenliegenden Massenkanäle (8') im auskragenden Abschnitt (4) bis an die Innenseite der Wickelwand (6) erstrecken.

7. Wickelvorrichtung (1) nach einem der Ansprüche 1 bis 6, **dadurch gekennzeichnet,**
- **dass** mindestens ein außenliegender Massenkanal (8') vorgesehen ist, der sich bis an die Innenseite der Wickelwand (6) erstreckt und der zumindest teilweise von der Innenseite der Wickelwand (6) begrenzt ist,
- **dass** mindestens ein innenliegender Massenkanal (8") vorgesehen ist, der im auskragenden Abschnitt (4) entfernt von der Wickelwand (6) angeordnet ist,
- und **dass** die Massenkanalwand (9") des innenliegenden Massenkanals (8") im auskragenden Abschnitt (4) durch die Massenkanalwand (9') oder Massenkanalwände (9') des mindestens einen außenliegenden Massenkanals (8') an der Wickelwand (6) abgestützt ist.

8. Wickelvorrichtung (1) nach einem der Ansprüche 1 bis 7, **dadurch gekennzeichnet,**
- **dass** mehrere Massenkanäle (8) einen von eine kreisrunden Form abweichenden Querschnitt aufweisen,
- und/oder dass mehrere Massenkanäle (8) einen kreissektorförmigen oder ringsegmentförmigen Querschnitt aufweisen.

9. Wickelvorrichtung (1) nach einem der Ansprüche 1 bis 8, **dadurch gekennzeichnet,**
- **dass** der Rolldorn (2) um die Hauptachse (5) drehbar oder drehbar angetrieben angeordet ist,
- **dass** der Rolldorn (2) im Bereich seines gelagerten Abschnitts (3) von mehreren entlang der Hauptachse (5) voneinander beabstandet angeordneten Zuführringkammern (10) zur Zuführung der Massen in die Massenkanäle (8) des drehenden Rolldorns (2) umgeben ist,
- **dass** sich die Massenkanäle (8) bis in den gelagerten Abschnitt (3) des Rolldorns (2) erstrecken dort in radialer Richtung oder schräg jeweils in eine der Zuführringkammern (10) münden.

10. Wickelvorrichtung (1) nach einem der Ansprüche 1 bis 9, **dadurch gekennzeichnet, dass** eine um eine Nebenachse drehbare oder drehbar angetriebene Andrückwalze (12) vorgesehen ist.

11. Wickelvorrichtung (1) nach einem der Ansprüche 1 bis 10, **dadurch gekennzeichnet, dass** der Rolldorn (2) oder die Massenkanäle (8) des Rolldorns (2) durch einen Temperierkanal (16) oder mehrere Temperierkanäle beheizt oder gekühlt sind.

12. Wickelvorrichtung (1) nach einem der Ansprüche 1 bis 11, **dadurch gekennzeichnet, dass** der Rolldorn (2) und insbesondere die Wickelwand (6) einen Temperierkanal oder mehrere Temperierkanäle, wie insbesondere einen Kühlkanal oder einen Heizkanal zur Leitung eines Temperiermediums umfasst.

13. Wickelvorrichtung (1) nach einem der Ansprüche 1 bis 12, **dadurch gekennzeichnet, dass** der Rolldorn (2) und/oder die Ringkammern (10), zur Durchleitung eines Temperiermediums und zur Temperierung der Masse, im gelagerten Abschnitt (3) von einem oder mehreren Temperierkanälen umgeben ist.

14. Wickelvorrichtung (1) nach einem der Ansprüche 1 bis 13, **dadurch gekennzeichnet, dass** die mindestens eine Massenkanalwand (9) oder der Massenkanalverbund spiralförmig oder verdreht ausgebildet ist.

15. **Backmaschine** zum kontinuierlichen Herstellen von essbaren Waffelröllchen mit zumindest einer, kontinuierlich umlaufenden, beheizten Backfläche (13) zum Backen von zumindest einem, endlosen, im warmen Zustand plastisch verformbaren Waffelband aus flüssigem, zuckerhaltigem Waffelteig und mit einer Verarbeitungsstation, in der für jedes gebackene Waffelband jeweils eine der Backfläche benachbarte Abnahmevorrichtung, eine dieser Abnahmevorrichtung nachgeordnete Wickelvorrichtung (1) zum Erzeugen eines endlosen hülsenförmigen Hohlkörpers und eine der Wickelvorrichtung (1) nachgeordnete Schneidvorrichtung zum Ablängen des hülsenförmigen Hohlkörpers in einzelne Waffelröllchen vorgesehen ist, **dadurch gekennzeichnet, dass** die Wickelvorrichtung (1) nach einem der vorangegangenen Ansprüche ausgebildet ist.
